# EUROPÄISCHE PATENTANMELDUNG

(11) **EP 1 030 204 A1**
(43) Veröffentlichungstag der Anmeldung: **23.08.2000**
(21) Anmeldenummer: 00101962.9
(22) Anmeldetag: 01.02.2000
(51) Int. Cl.: G02B 6/44

(54) **Profilband zur Befestigung und zum Schutz von Lichtwellenleitern oder Lichwellenleiterkabeln**

(30) Priorität: 19.02.1999 DE 19907178
(71) Anmelder: SIEMENS AKTIENGESELLSCHAFT, 80333 München (DE)
(72) Erfinder: Edgar, Heinz, 96523 Steinach (DE); Mayr, Ernst, 82319 Starnberg (DE); Müller, Thomas, 96515 Sonneberg (DE)
(74) Vertreter: Viering, Jentschura & Partner

(57) **Zusammenfassung**

Die Erfindung betrifft ein Profilband (PB1 bis PB5) das aus einem bandförmigen Befestigungssteg (BS, EBS) und einem längsverlaufenden rohrförmigen Profilteil (RP) mit einem längsverlaufenden Hohlraum (H) besteht. Das Profilband (PB1 bis PB5) wird an einem Untergrund befestigt und in dem längsverlaufenden Hohlraum (H) werden Lichtwellenleiterelemente wie Lichtwellenleiter, Lichtwellenleiterbändchen oder Lichtwellenleiterkabel eingebracht.

## Beschreibung

Die Erfindung betrifft ein Profilband zur Befestigung und zum Schutz von Lichtwellenleitern oder Lichtwellenleiterkabeln.

Allgemein bekannt ist das Befestigen von elektrischen Leitungen, sogenannten Stegleitungen, mit Hilfe von Nägeln oder Klebern an glatten Flächen oder Mauern. Weiterhin ist bekannt, Kabel oder ähnliche langgestreckte Gegenstände mit Hilfe von Schellen an glatten Flächen oder Mauern zu befestigen. Außerdem ist allgemein bekannt, daß Kabel in Rohren eingezogen werden, die vorher mit Hilfe von Schellen oder ähnlichen Befestigungsmitteln an einem Untergrund befestigt worden sind.

Bei der Verlegung von Lichtwellenleitern, Lichtwellenleiterbändchen oder Lichtwellenleiterkabeln gestaltet sich die Verlegung entlang von glatten Flächen oder Wänden wesentlich schwieriger, da diese langgestreckten Elemente sehr empfindlich sind und deshalb mit großer Sorgfalt behandelt werden müssen.

Der vorliegenden Erfindung liegt die Aufgabe zugrunde, ein einfaches und sicheres Verlege- und Schutzelement für Lichtwellenleiter, Lichtwellenleiterbändchen oder Lichtwellenleiterkabel zu schaffen, mit dem mechanische Beschädigungen beim Verlegen der Lichtwellenleiter, Lichtwellenleiterbändchen oder Lichtwellenleiterkabel weitestgehend ausgeschlossen werden können. Die gestellte Aufgabe wird nun gemäß der Erfindung mit einem Profilband der eingangs geschilderten Art dadurch gelöst, daß es aus mindestens einem bandförmigen Befestigungssteg und mindestens einem rohrförmigen Profilteil mit mindestens einem längsverlaufenden Hohlraum besteht, daß am Befestigungssteg Mittel zur Fixierung an einem Untergrund angeordnet sind und daß mindestens ein längsverlaufendes zugfestes Element angeordnet ist.

Das Profilband gemäß der Erfindung besteht somit im wesentlichen aus zwei Grundelementen, einem längsverlaufenden bandförmigen Befestigungssteg und einem rohrförmigen Profilteil. Der Befestigungssteg dient zur Befestigung des Profilbandes an dem entsprechenden Untergrund mit Hilfe von Befestigungsmitteln wie Schrauben, Nägel oder Kleber, während das rohrförmige Profilteil die Lichtwellenleiter, Lichtwellenleiterbändchen oder Lichtwellenleiterkabel - im folgenden Lichtwellenleiterelemente genannt - aufnehmen. Am einfachsten läßt sich das Profilband montieren, wenn es einstückig ausgebildet ist, das heißt wenn das rohrförmige Profilteil formschlüssig am Befestigungssteg angeformt ist und beispielsweise durch gemeinsame Extrusion hergestellt ist. Dadurch ist bei der Montage nur ein einziges Teil zu führen. Das Profilband kann sich aber auch zusammensetzen aus zwei Einzelteilen, dem Befestigungssteg und dem rohrförmigen Profilteil, wobei das Zusammenführen beider Teile mit Hilfe von Rastelementen erfolgt, die auf dem Befestigungssteg angeordnet sind und in die das rohrförmige Profilteil nach der Verlegung eingerastet wird. Bei beiden Ausführungsformen kann sich der Befestigungssteg entweder nur einseitig oder beidseitig vom rohrförmigen Teil hinweg erstrecken, so daß die Befestigung entweder einseitig oder beidseitig erfolgen kann. Die einseitige Ausführung hat den Vorteil, daß mehrere Profilbänder eng nebeneinander verlaufend angeordnet werden können, während die beidseitige Ausführung den Vorteil hat, daß die Befestigung zum Beispiel mit Nägeln zu beiden Seiten des rohrförmigen Profilteils erfolgen kann. Das Profilband muß querdruckstabile Eigenschaften aufweisen, damit eine Verformung beim Verlegevorgang nicht auftreten kann. Außerdem ist in oder auf dem Profilband mindestens ein längsverlaufendes zugfestes Element angeordnet, um Dehnungen oder Stauchungen zu verhindern. Die Lichtwellenleiterelemente werden in dem rohrförmigen Profilteil geschützt geführt und können entweder bereits werksseitig oder auch erst am Montageort eingebracht werden. Wenn nachträgliches Einziehen der Lichtwellenleiterelemente gefordert wird, wird zweckmäßigerweise ein Einzugshilfsfaden, zum Beispiel ein Aramidgarn, eingeführt.

Als Werkstoff für das Profilband wird bei der Verwendung in Gebäuden vorzugsweise ein nicht brennbares Material verwendet, wie es zum Beispiel bei den FRNC-Materialien (Flame Resistant Non Corrosive) oder auch bei PVC (Polyvinilchlorid) der Fall ist.

Für den Außeneinsatz eignet sich besonders Polyethylen mittlerer Dichte (MDPE) oder High-Density-Polyethylen (HDPE). Als Lichtwellenleiterelemente werden je nach Bedarf Lichtwellenleiterfasern, Faserbündel, Faserbändchen oder Kunststofflichtwellenleiter oder Lichtwellenleiterkabel verwendet. Die entsprechenden Lichtwellenleiter können in einer eigenen Einoder Zweischichthülle untergebracht sein und werden dann in einem zweiten Fertigungsgang vom Werkstoff für das Profilband umgeben. Die Herstellung des gesamten Profilbandes mit Bestückung kann jedoch auch in sogenannter Tandemextrusion in einem Fertigungsschritt hergestellt werden. Es können aber auch Lichtwellenleiter direkt mit oder ohne Füllmasse in den Hohlraum des rohrförmigen Profilteils eingefahren werden.

Als zugfestes Element kommt vorzugsweise ein glasfaserverstärktes Element, zum Beispiel ein epoxygetränkter Glasroving in Frage. Für die Befestigung des Profilbandes mit Hilfe des Befestigungssteges kann ein Kleber verwendet werden, der entweder werksseitig oder am Montageort aufgetragen wird. Als Kleberschicht eignet sich zum Beispiel ein Acrylatkleber. Bei werksseitiger Auftragung der Kleberschicht wird zweckmäßigerweise eine Schutzschicht mit aufgebracht, so daß das Profilband trotz Kleberbeschichtung auf einer Trommel aufgewickelt werden kann. Es kann auch ein Schmelzkleber verwendet werden, wenn am Montageort die Verwendung einer Wärmequelle möglich ist.

Bei der Befestigung des Profilbandes mit Hilfe von Nägeln, die in bereits im Befestigungssteg eingebrachte Löcher eingesteckt werden, verwendet man vorzugsweise einen sogenannten Nagler oder Tacker, in dem ein entsprechendes Magazin an Befestigungselementen untergebracht ist.

Die Befestigungsseite des Befestigungssteges ist vorzugsweise mit einer Profilierung oder einer Aufrauhung versehen, um besseres Haften des Klebers zu gewährleisten.

Der Befestigungssteg kann beispielsweise auch mittig eine längsverlaufende Auswölbung aufweisen, die so groß ist, daß sie als längsverlaufender Hohlraum für eine weitere Führung von Lichtwellenleiterelementen ausgenützt werden kann. Hierfür eignet sich jedoch nur die Ausführungsform mit beidseitig abstehenden Befestigungsstegteilen, da die längsverlaufende Auswölbung beidseitig gesichert sein muß.

Die längsverlaufenden Hohlräume des Profilbandes können auch mit einem Schutzmittel gegen eindringendes Wasser gefüllt sein, wobei sich hierfür beispielsweise an sich bekannte Quellpulver oder Quellfäden eignen.

Bei der Ausbildung von mehreren längsverlaufenden Hohlräumen kann man ein quasi anzapfsicheres Kabel erhalten, wenn das zu sichernde Kabel in dem durch die Auswölbung geformten Hohlraum eingezogen wird und parallel hierzu darüber liegenden Hohlraum ein Überwachungskabel oder Lichtwellenleiter geführt wird. Um an das zu überwachende Kabel heranzukommen, muß somit die darüber liegende Alarmader zerstört werden, wobei aber dann Alarm ausgelöst wird.

Die Erfindung wird nun anhand von sechs Figuren näher erläutert.
- Figur 1: zeigt ein Ausführungsbeispiel der Erfindung mit einem beidseitig vom rohrförmigen Profilteil abstehenden Befestigungssteg.
- Figur 2: zeigt ein Profilband mit einer mittig längsverlaufenden Auswölbung.
- Figur 3: zeigt ein Ausführungsbeispiel, bei dem das rohrförmige Profilteil im Befestigungssteg eingerastet wird.
- Figur 4: zeigt ein Profilband mit beidseitig abstehendem Befestigungssteg, bei dem Lichtwellenleiterelemente eingeführt sind.
- Figur 5: zeigt ein Ausführungsbeispiel mit einem einseitig abstehenden Befestigungssteg.
- Figur 6: zeigt eine Ausführung nach Figur 2, bei der eine anzapfsichere Verlegung vorgenommen wurde.

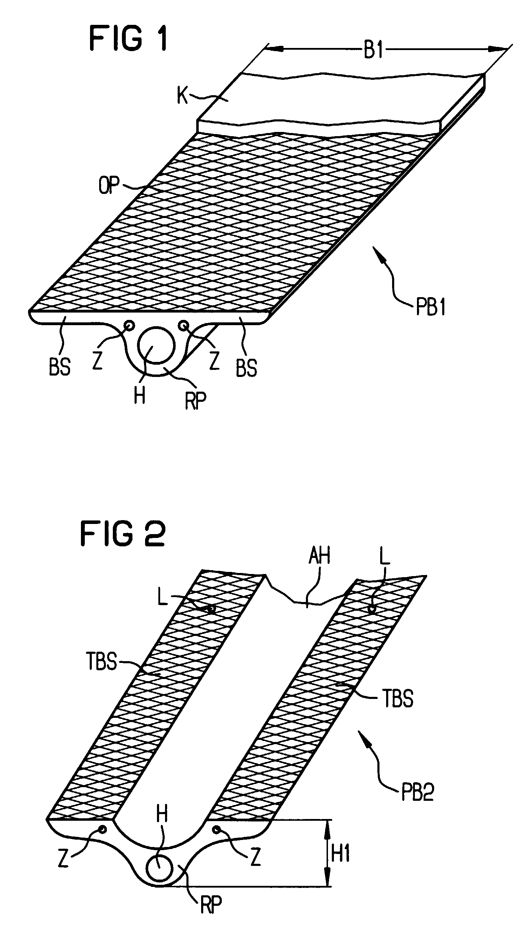

Figur 1 zeigt ein Profilband PB1, bei dem der Befestigungssteg BS beidseitig von einem rohrförmigen Profilteil RP durchgehend absteht. Die hier nach oben weisende Befestigungsseite weist vorzugsweise eine Profilierung OP auf, damit zum Beispiel bei der Beschichtung mit einer Kleberschicht K eine gute Haftung zustandekommt. Die Kleberschicht K kann werksseitig aufgebracht werden, wobei sie dann mit einer Schutzschicht versehen wird, die vor der Montage abgezogen wird. Das rohrförmige Profilteil RP weist einen längsverlaufenden Hohlraum H auf, in dem die Lichtwellenleiterelemente werksseitig oder nach der Montage des Profilbandes PB1 eingeführt werden. Weiterhin ist das Profilband PB1 mit längsverlaufenden zugfesten Elementen Z versehen, um die Lichtwellenleiterelemente bei Einwirkungen von äußeren Belastungen, insbesondere von Zug- oder Druckkräften, nicht zu gefährden. Die Breite B1 der Ausführungsbeispiele allgemein beträgt zum Beispiel 10 mm und kann bei Bedarf auch in anderen Breiten gefertigt werden. Die Länge ist praktisch unbegrenzt und richtet sich zum Beispiel nach der Aufnahmefähigkeit einer Vorratstrommel, auf die das Profilband aufgewickelt werden kann. Das ohrförmig ausgebildete rohrförmige Profilteil RP ist zum Beispiel bei diesem Ausführungsbeispiel durch gemeinsame Extrusion zusammen mit dem Befestigungssteg BS hergestellt.

Figur 2 zeigt ein Ausführungsbeispiel der Erfindung, bei dem das Mittelteil des Profilbandes PB2 mittig mit einer Auswölbung versehen ist, die als weiterer Hohlraum AH für die Aufnahme weiterer Lichtwellenleiterelemente vorgesehen werden kann. Dadurch ist die Befestigungsseite des Profilbandes PB2 unterbrochen und weist für die Befestigung zwei Teilflächenstege TBS auf, die sich zu jeder Seite des ausgebildeten Hohlraumes AH erstrecken. Hier ist noch dargestellt, daß die Teilbefestigungsstege TBS mit Löchern L versehen sein können, durch die zum Beispiel Nägel zur Befestigung des Profilbandes PB2 in den Untergrund geschlagen werden können. Es sind wiederum zugfeste Elemente Z eingelagert. Die Höhe H1 der Anordnung beträgt beispielsweise 6 bis 20 mm.

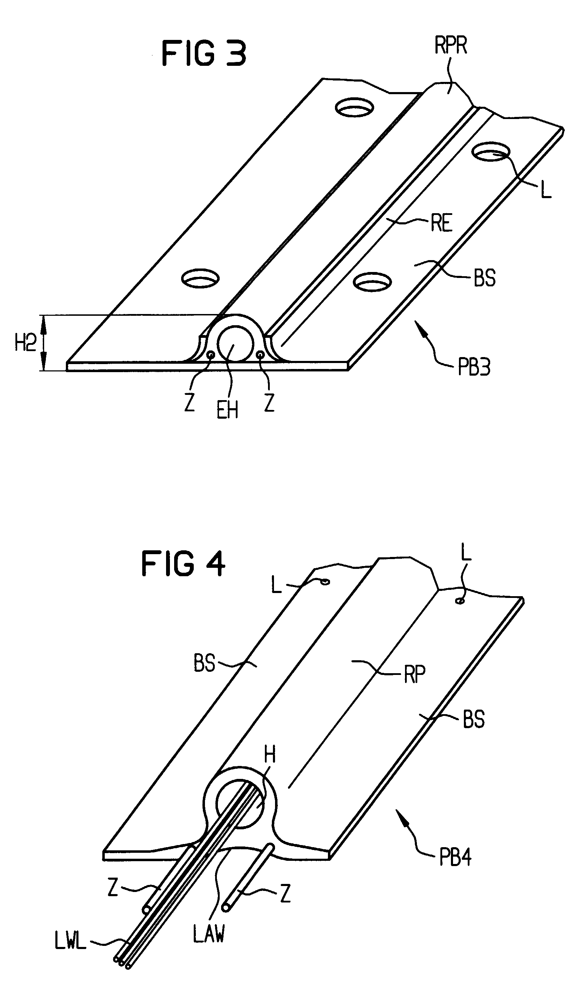

Figur 3 zeigt ein Ausführungsbeispiel für ein Profilband PB3, bei dem der Befestigungssteg BS mittig verlaufende Rastelemente RE aufweist, zwischen denen ein rohrförmiges Profilteil RPR einrastbar ist, so daß zunächst der Befestigungssteg BS und später bei Bedarf das rohrförmige Profilteil RPR eingerastet werden kann. In entsprechenden Abständen sind Löcher L zur Befestigung mit Nägeln vorgesehen. Die Höhe dieser Ausführung liegt beispielsweise bei 6 bis 20 mm. Auch hier sind zugfeste Elemente Z angeordnet.

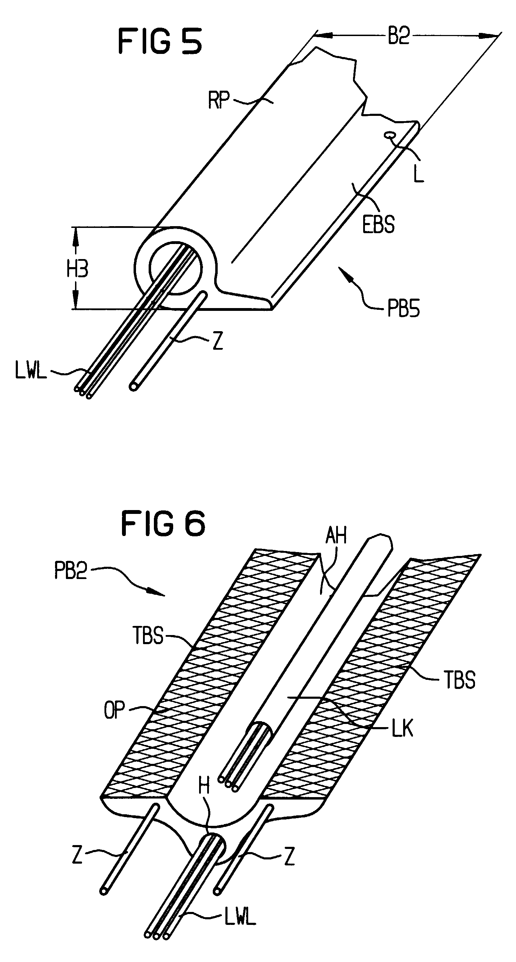

Figur 4 zeigt als Ausführungsbeispiel ein Profilband PB 4, bei dem bereits Lichtwellenleiterelemente LWL in dem längsverlaufenden Hohlraum H eingebracht worden sind. Der Befestigungssteg BS ist mittig mit einer leichten Auswölbung LAW versehen, um zum Beispiel Unebenheiten des Untergrundes besser ausgleichen zu können. Löcher L sind ebenfalls angeordnet, so daß wahlweise eine Befestigung mit Nägeln oder ohne Verwendung von Nägeln mit Hilfe einer Klebeschicht erfolgen kann.

Figur 5 zeigt ein Ausführungsbeispiel eines Profilbandes PB5 mit einem einzigen seitlich abstehenden Befestigungssteg EBS, wobei die gesamte Breite B2 beispielsweise 10 mm beträgt. Bei einer Höhe H3 von zum Beispiel 6 bis 22 mm. In diesem Befestigungssteg EBS sind ebenfalls wieder Löcher L vorgesehen. Im angeformten rohrförmigen Profilteil RP sind wiederum bereits Lichtwellenleiterelemente LWL eingebracht. Außerdem ist ein zugfestes Element Z längsverlaufend eingelagert.

Die Figur 6 zeigt schließlich ein Ausführungsbeispiel, bei dem das in Figur 2 bereits erläuterte Profilband PB2 mit zwei unabhängigen Lichtwellenleiterelemente-Systemen bestückt ist. In dem Hohlraum AH der Auswölbung ist zum Beispiel ein zu überwachendes Lichtwellenleiterkabel LK eingeführt, während im darüber liegenden Hohlraum H z.B. einzelne Lichtwellenleiter angeordnet sind, von denen beispielsweise einer für die Überwachung als Alarmleitung verwendet werden kann. Wenn nämlich an das zu überwachende Lichtwellenleiterkabel LK herangekommen werden soll, muß zunächst auch der zur Überwachung vorgesehene Lichtwellenleiter im Hohlraum H durchtrennt bzw. beschädigt werden, wodurch dann Alarm gegeben bzw. ausgelöst wird. Die Oberfläche der Teilbefestigungsstege TBS sind mit einem Profil OP versehen und außerdem sind zugfeste Elemente Z längsverlaufend eingebettet.

## Patentansprüche

1. Profilband zur Befestigung und zum Schutz von Lichtwellenleitern oder Lichtwellenleiterkabel,
**dadurch gekennzeichnet,**
daß es aus mindestens einem bandförmigen Befestigungssteg (BS, EBS) und mindestens einem rohrförmigen Profilteil (RP, RPR) mit mindestens einem längsverlaufenden Hohlraum (H, AH) besteht, daß am Befestigungssteg (BS, EBS) Mittel (K, L) zur Fixierung an einem Untergrund angeordnet sind und daß mindestens ein längsverlaufendes zugfestes Element (Z) angeordnet ist.

2. Profilband nach Anspruch 1,
**dadurch gekennzeichnet,**
daß das rohrförmige Profilteil (RP) am Befestigungssteg (BS) formschlüssig, vorzugsweise durch gemeinsame Extrusion, angeformt ist.

3. Profilband nach Anspruch 1,
**dadurch gekennzeichnet,**
daß das rohrförmige Profilteil (RPR) als selbständiges Rohr ausgebildet ist und an dem Befestigungssteg (BS) nachträglich, vorzugsweise in Rastelementen (RE), angebracht ist.

4. Profilband nach einem der vorhergehenden Ansprüche,
**dadurch gekennzeichnet,**
daß der Befestigungssteg (EBS) einseitig vom rohrförmigen Profilteil (RP, RPR) absteht.

5. Profilband nach einem der vorhergehenden Ansprüche,
**dadurch gekennzeichnet,**
daß der Befestigungssteg (BS) beidseitig vom rohrförmigen Profilteil (RP, RPS) absteht.

6. Profilband nach einem der vorhergehenden Ansprüche,
**dadurch gekennzeichnet,**
daß das Profilteil (RP, RPR) als ohrförmige Ausformung entlang des Befestigungssteges (BS) angeordnet ist.

7. Profilband nach einem der vorhergehenden Ansprüche,
**dadurch gekennzeichnet,**
daß der Befestigungssteg (BS) auf der Befestigungsseite als einflächige Ebene gestaltet ist.

8. Profilband nach einem der Ansprüche 1 bis 6,
**dadurch gekennzeichnet,**
daß der Befestigungssteg auf der Befestigungsseite mittig eine längsverlaufende Auswölbung aufweist, die als weiterer längsverlaufender Hohlraum (AH) verwendbar ist und daß zu jeder Seite des Hohlraumes (AH) ein Teilbefestigungssteg (TBS) längsverlaufend angeordnet ist.

9. Profilband nach einem der vorhergehenden Ansprüche,
**dadurch gekennzeichnet,**
daß der Befestigungssteg (BS) auf der Befestigungsseite als Mittel zur Fixierung eine Kleberschicht (K), vorzugsweise ein Acrylat-Kleber mit vorzugsweise einer abdeckenden Schutzschicht aufweist.

10. Profilband nach einem der vorhergehenden Ansprüche,
**dadurch gekennzeichnet,**
daß als Mittel zur Fixierung Löcher (L) für Schrauben oder Nägel in Abständen in dem Befestigungssteg (BS, EBS) angeordnet sind.

11. Profilband nach einem der vorhergehenden Ansprüche,
**dadurch gekennzeichnet,**
daß das zugfeste Element (Z) aus einem glasfaserverstärktem Kunststoffgarn besteht, vorzugsweise aus einem epoxigetränktem Glasroving.

12. Profilband nach einem der vorhergehenden Ansprüche,
**dadurch gekennzeichnet,**
daß das zugfeste Element (Z) innerhalb des Befestigungssteges (BS, EBS) eingebettet ist.

13. Profilband nach einem der Ansprüche 1 bis 11,
**dadurch gekennzeichnet,**
daß das zugfeste Element (Z) auf der Oberfläche des Befestigungssteges (BS, EBS) angeordnet ist.

14. Profilband nach einem der vorhergehenden Ansprüche,
**dadurch gekennzeichnet,**
daß ein Einzugshilfefaden (EH) innerhalb des rohrförmigen Profilteils (RP, RPR) eingebracht ist.

15. Profilband nach einem der vorhergehenden Ansprüche,
**dadurch gekennzeichnet,**
daß die Lichtwellenleiterelemente wie Lichtwellenleiter, Lichtwellenleiterbändchen oder Lichtwellenleiterkabel am Montageort in dem Hohlraum (H) einziehbar sind.

16. Profilband nach einem der Ansprüche 1 bis 14,
**dadurch gekennzeichnet,**
daß Lichtwellenleiterelemente wie Lichtwellenleiter, Lichtwellenleiterbändchen oder Lichtwellenleiterkabel werkseitig in dem Hohlraum (H) eingebracht sind.

17. Profilband nach einem der vorhergehenden Ansprüche,
**dadurch gekennzeichnet,**
daß in einem Hohlraum (AH) Lichtwellenleiter, Lichtwellenleiterbändchen oder Lichtwellenleiterkabel und in einem anderen parallel verlaufenden Hohlraum (H) des gleichen Profilbandes (PB2) eine Alarmleitung angeordnet sind.

18. Profilband nach einem der vorhergehenden Ansprüche,
**dadurch gekennzeichnet,**
daß als Material ein nicht brennbarer FRNC-Kunststoff (Flame Resistant Non Corrosive), vorzugsweise Polyethylen mittlerer Dichte (MDPE) oder High-Density-Polyethylen (HDPE) oder Polyvinilchlorid (PVC) verwendet ist.

19. Profilband nach einem der vorhergehenden Ansprüche,
**dadurch gekennzeichnet,**
daß in dem Hohlraum (H) eine gelartige Füllmasse eingebracht ist.

20. Profilband nach Anspruch 9,
**dadurch gekennzeichnet,**
daß die Oberfläche der Befestigungsseite des Befestigungssteges (BS, TBS) eine Profilierung (OP) aufweist.

21. Profilband nach einem der vorhergehenden Ansprüche,
**dadurch gekennzeichnet,**
daß der Hohlraum (H, AH) ein Schutzmittel gegen eindringendes Wasser, vorzugsweise Quellpulver oder Quellfäden, enthält.
